# EUROPEAN PATENT SPECIFICATION

(11) **EP 2 860 695 B1**
(45) Date of publication and mention of the grant of the patent: **06.12.2017**
(21) Application number: 14188769.5
(22) Date of filing: 14.10.2014
(51) Int. Cl.: G06T 5/00, G06T 7/593

(54) **Method and apparatus for identifying noise in disparity depth image**
Verfahren und Vorrichtung zur Identifizierung von Rauschen in Disparitätstiefenbildern
Procédé et appareil permettant d'identifier le bruit dans l'image de profondeur de disparité

(30) Priority: 14.10.2013 CN 201310478587
(43) Date of publication of application: 15.04.2015
(73) Proprietor: Ricoh Company, Ltd., Tokyo 143-8555 (JP)
(72) Inventor: Liu, Yuan, Haidian District, Beijing100044 (CN); Zhenhua, Liu, Haidian District, Beijing 100044 (CN); Zhongchao, Shi, Haidian District, Beijing100044 (CN); Yaojie, Lu, Haidian District, Beijing100044 (CN)
(74) Representative: Maury, Richard Philip

(56) References cited:
- EP-A1- 2 293 586
- EP-A1- 2 547 095
- EP-A2- 0 738 872
- EP-A2- 2 211 555
- EP-A2- 2 466 903

## Description

### BACKGROUND OF THE INVENTION

### 1. Field of the Invention

The present invention generally relates to a method for processing a disparity depth image, and specifically, a method and an apparatus for identifying noise in a disparity depth image.

### 2. Description of the Related Art

Image matching is one of the basic research agendas in the field of computer vision and computer recognition, and is widely used in the fields of multi-source image fusion, target identification, three-dimensional reconstruction or the like.

With the development of the fields of the three-dimensional reconstruction technology, virtual reality or the like, the demand for accuracy and density of the disparity map is further increasing, and it is hoped that reliable depth information of each of the pixels in the image are obtained. The purpose of the stereo image matching is to find a pair of matched pixels from two imaging planes in the same three-dimensional scene, calculate disparity values d corresponding to pixel coordinates, respectively, and obtain three-dimensional space information that can represent the scene accurately.

The disparity map may be obtained by using various conventional methods for calculating disparity values, such as block matching, dynamic programming method, graph cut method, semi-global matching method (SGM) or the like. However, whatever such methods are used, there is some noise in the obtained disparity map, namely, the differences between the disparity values of some pixels and their peripheral pixels are great, and wrong and uneven pixels are formed.

Some noise removal methods of disparity maps have been proposed in the prior art.

In a conventional image noise removal method, various filtering methods are often used. For example, as a non-linear digital filtering method, median filtering is widely used. However, in the median filtering method, the size of image window is limited. If the size of the window is too large, the image will become blurred and it is inconvenient for subsequent image processing; if the size of the window is too small, some noise cannot be removed and the execution efficiency is low. Furthermore, in the median filtering, the disparity values of all pixels, including the correct disparity values, may change; accordingly much more noise may be generated. Additionally, it is necessary to perform the median filtering for all of the pixels; therefore it is time consuming.

In U.S. Patent US7570804B2, a disparity calculation method based on dynamic programming and GGCP is disclosed, and the noise processing in the Patent 804 is performed simultaneously with the disparity calculation. In this method, a matching cost value may be obtained in the disparity calculation, and if the difference between a lowest cost value and a second lowest cost value is less than a threshold, it may be determined that the reliability of the disparity calculation is not high and the disparity value may be removed as noise. The efficiency of this noise removal method is high, therefore it is widely used; however, as a disadvantage, many correct disparity values may also be removed as noise.

In the article on Journal of Xidian University (Natural Science Edition), No. 1 in 2003, for which the authors are ShenYan and YangZhiqing et al., and the title is "Hierarchical filtering algorithm of distance image", a hierarchical filtering algorithm of a distance image is disclosed. In this method, the image is divided into a plurality of layers, low-pass filtering is performed for each layer, and the layers are integrated to form the final distance image. This method still uses a filtering method, therefore many correct disparity values may be affected.

EP 2 211 555A discloses a method for identifying noise in a disparity depth image, the method comprising dividing the disparity depth image into a plurality of image blocks.

EP 2 293 586A discloses for each of image blocks, determining a reliable disparity value range in a disparity value range of the image block; for each of pixels in the image block, determining whether the disparity value of the pixel is within the reliable disparity value range of the image block, and determining that the disparity value of the pixel is noise if the disparity value of the pixel is not within the reliable disparity value range.

EP 2 466 903A discloses detecting a disparity range of stero content by calibrating the stereo content, detecting distinctive pixels in the stereo content, calculating cost values, determining the candidate disparity values, and creating a histogram.

### SUMMARY OF THE INVENTION

The present invention has an object to provide a noise identification method and apparatus that can quickly identify noise without affecting correct disparity values.

The present invention is in the method of Claim 1 and the apparatus of Claim 6.

According to the noise identification method and apparatus, size of the selected blocks can be increased; therefore, higher computation efficiency can be obtained, and subsequent noise removal processing can be performed for only the identified noise pixels without affecting non-noise pixels.

### BRIEF DESCRIPTION OF THE DRAWINGS

The above aspects and merits and/or other aspects and merits of the present invention will become more apparent from the following detailed description of the embodiments of the present invention when read in conjunction with the accompanying drawings.
FIG. 1 is a schematic drawing illustrating a system including functional units for initially generating a disparity map and removing noise of the initial disparity map according to an embodiment of the present invention;
FIG. 2 is a schematic drawing illustrating an initial disparity map obtained by stereo matching;
FIG. 3 is an overall flowchart illustrating a noise identification method for identifying noise in a disparity depth image according to an embodiment of the present invention;
FIG. 4(a) is a schematic drawing illustrating a disparity distribution histogram of an image block, in which one peak is included, and FIG. 4(b) is a schematic drawing illustrating a disparity distribution histogram of an image block, in which a plurality of peaks are included;
FIG. 5 is a flowchart illustrating a method for determining a reliable disparity value range from a disparity value range of an image block according to an embodiment of the present invention;
FIG. 6 is a configuration block diagram illustrating a noise identification apparatus for identifying noise in a disparity depth image according to an embodiment of the present invention; and
FIG. 7 is a block diagram illustrating a computation system 400 for implementing the embodiment of the present invention.

### DETAILED DESCRIPTION OF THE PREFERRED EMBODIMENTS

In the following, embodiments of the present invention are described in detail with reference to the accompanying drawings, so as to facilitate the understanding of the present invention.

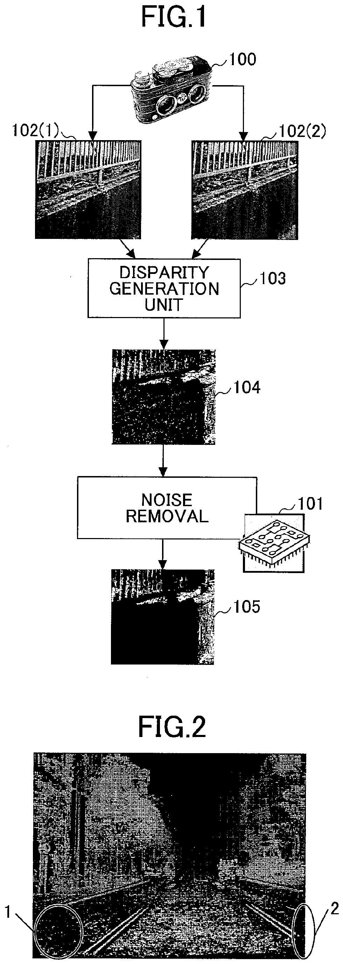

FIG. 1 is a schematic drawing illustrating a system including functional units for initially generating a disparity map and removing noise of the initial disparity map according to an embodiment of the present invention. As illustrated in FIG. 1, a left image 102(1) and a right image 102(2) are obtained by a binocular camera 100, and are input into a disparity map generation unit 103, and then an initial disparity map 104 is obtained with a disparity map generation algorithm. The disparity map generation unit 103 may be built in a binocular camera or an external computing device, and may also be an independent hardware device. The generated disparity is input into a noise removal apparatus 101, and noise is removed and a disparity map 105 in which noise is removed is obtained. It should be noted that, the noise removal apparatus 101 may be integrated with the binocular camera 100 (or a stereo camera) as a hardware device, or may be implemented as an independent hardware device or a component of another computing device.

FIG. 2 is a schematic drawing illustrating an initial disparity map obtained by stereo matching. Here, noise is shown by the circles 1 and 2.

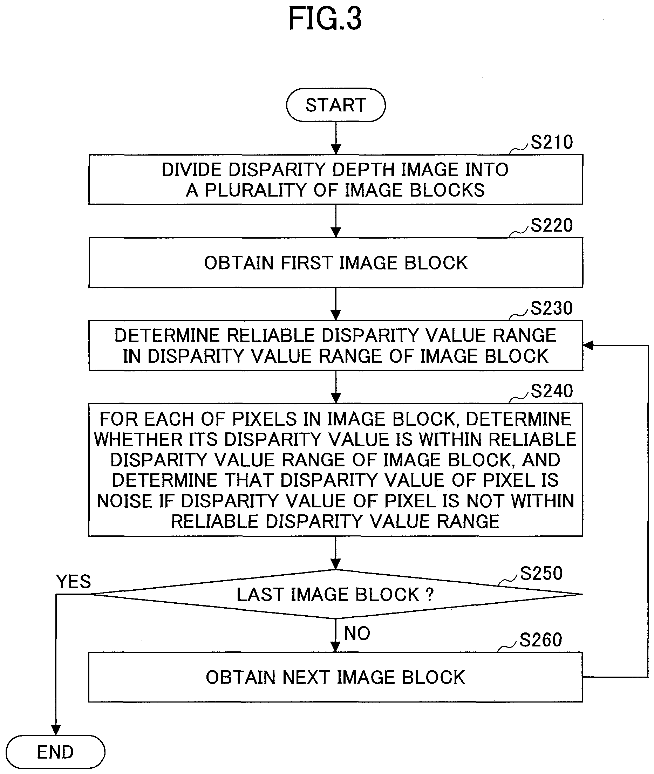

In the following, a noise identification method for identifying noise in a disparity depth image according to the embodiment of the present invention will be described with reference to FIG. 3.

FIG. 3 is an overall flowchart illustrating a noise identification method for identifying noise in a disparity depth image according to an embodiment of the present invention.

In step S210, the disparity depth image is divided into a plurality of image blocks.

It should be noted that, the source of the disparity depth image is not limited, namely, the disparity depth image may be locally generated or received from the outside. Furthermore, the disparity depth map may be obtained by any disparity calculation methods, such as a block matching method, a dynamic programming method, a graph cut method or a semi-global matching method or the like, and the present invention is not limited to such disparity depth image generation methods. Furthermore, any other processing may be performed for the disparity depth image, before the noise identification method of the present invention is performed for the disparity depth image.

It should be noted that, the disparity depth image may be an originally obtained whole image, or a portion extracted from a whole image. That is to say, the present invention is not limited to the size, shape or the like of an image to be processed.

As examples of the image block division method, in an example, the whole disparity depth image may be divided into the image blocks that do not overlap each other. In another example, the whole disparity depth image may also be divided into the overlapping image blocks. For example, each of the image blocks may half-overlaps with a horizontal-adjacent image block in a horizontal direction, namely, a half of the image blocks overlap each other. By overlapping the image blocks, all of the pixels can be located at an intermediate position in an image block, and an object in the image block can be completely retained in the image block without being cut by the image blocks.

Regarding the size of the image blocks, preferably, the image blocks have a size such that an object in the disparity map is not separated. Namely, the image blocks have a size such that an object does not appear in different image blocks but the same image block.

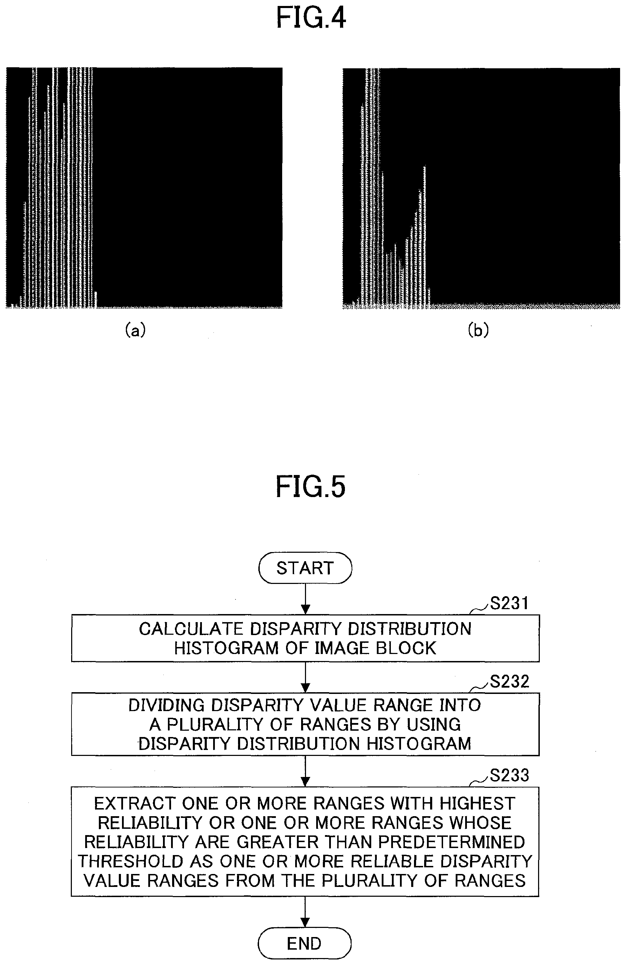

In conventional noise removal method based on filtering, the sizes of image blocks are very small, such as 3*3 or 5*5. In many cases, a smaller image block includes only one object, thus there is only one peak in a histogram distribution of disparity values as illustrated in FIG. 4(a). In the example of FIG. 4(a), the method based on filtering generally can obtain good effect. However, in the example of FIG. 4(b), one image block includes a plurality of objects, and there are a plurality of peaks in the histogram as illustrated in FIG. 4(b). Accordingly, if a noise removal method based on filtering is still used for the example of FIG. 4(b), the image blocks after processing may become blurry and the separation of different objects may become unclear.

Compared to the size of the image blocks in a median filtering method, the size of the image blocks in the embodiment of the present invention may be much larger. In an example, the size of the image blocks according to the embodiment of the present invention may be 30*30. In another example, the size of the image blocks according to the embodiment of the present invention may be 40*40. However, they are just two examples, and the size of the image blocks according to the embodiment of the present invention may be smaller or larger.

As described later, in the method according to the embodiment of the present invention, the disparity values of the image blocks are analyzed to find a correct or reliable disparity value range, and it is determined that a pixel whose the disparity value is not within the reliable disparity value range is noise. Accordingly, the size of the selected blocks according to the embodiment of the present invention can be increased; thus, higher computation efficiency can be obtained, and subsequent noise removal processing can be performed for only the identified noise pixels without affecting non-noise pixels.

In an example, the size of the image blocks varies according to representative disparity values of the image blocks, and the larger the representative disparity value of the image block is, the larger the size of the image block is. The reason is because a larger disparity value means that the distance between the object and the camera is short and the actual size represented by the part of pixels is small; accordingly, the size of the image block may be larger so as to make the same object appear in the same image block. Conversely, a smaller disparity value means that the distance between the object and the camera is long, accordingly the size of the image block may be smaller.

In an example, the representative disparity value of the image block may be obtained by calculating the average value of the sum of the disparity values of all valid pixels (not including the pixels with a zero disparity value) in the image block. It should be noted that, in the present specification, unless otherwise mentioned, the pixels or valid pixels mean pixels with a valid disparity value (a non-zero disparity value). In another example, the representative disparity value of the image block may be a disparity value among the disparity values of the image block, which the most pixels have. However, the present invention is not limited to this definition of the representative disparity value, and the representative disparity value may be another value as needed.

In another example, in order to avoid separating an object in the disparity map, a rough object detection may be performed before the division of the image blocks, and the division of the image blocks may be performed based on the result of the object detection. In this way, different objects, and particularly, objects whose the disparities are clearly different do not appear in the same image block.

In step S220, a first image block is obtained.

Here, the order for selecting the image blocks is not limited; and a row scanning from left to right or from right to left may be performed in the order from top to bottom or from bottom to top. Alternatively, the selection of the image blocks may also be performed in another order such as a random order, as long as all of the image blocks can be scanned in an order.

In step S230, a reliable disparity value range in a disparity value range of the image block is determined.

The reliable disparity value range refer to a disparity value range for which the image block does not have noise in an ideal case. In the actual operation, the reliable disparity value range refer to one or more value ranges with a higher reliability in disparity value ranges of the image block.

In the following, a method for determining a reliable disparity value range from a disparity value range of the image block according to an embodiment of the present invention will be described with reference to FIG. 5.

FIG. 5 is a flowchart illustrating a method for determining a reliable disparity value range from a disparity value range of an image block according to an embodiment of the present invention.

As illustrated in FIG. 5, in step S231, a disparity distribution histogram of the image block is calculated.

In an example, the calculation of the disparity distribution histogram may include the following operations.

First, the disparity value range of the image block or a disparity value range of the whole disparity depth image is uniformly divided into m ranges [a0, a1), [a1, a2), ... , [a(m-1), am), where a0 and am are a minimum value and a maximum value of disparity values of the image block or the whole disparity depth image, respectively, and m is a positive integer greater than 2.

In an example, for all of the image blocks, a0 and am are a minimum value and a maximum value of the disparity values of the whole image. Since pixels with a zero disparity value (black pixels in the disparity map) are not considered in the noise removal of the present invention, a0 may be set as a minimum value such as 0.0001. The maximum value am may be determined based on limitation values of the stereo camera, and for example, for a specific camera, the maximum value may be 70. In an example, intervals of the ranges are 3. In another example, intervals of the ranges are 5. The intervals may be set as necessary.

After m ranges are obtained by the division, the disparity values of the pixels in the image block are scanned to take statistics of numbers of pixels within each of the ranges of the disparity values. In this way, a disparity distribution histogram such as FIG. 4(a) or FIG. 4(b) is obtained.

After the disparity distribution histogram is obtained by the calculation in step S231, the processing proceeds to step S232.

In step S232, the disparity value range is divided into a plurality of disparity ranges, by using the disparity distribution histogram.

The operation for dividing the disparity ranges in step S232 is for the subsequent selection of the reliable disparity value range from such disparity ranges.

In an example, dividing the disparity value range into the disparity ranges by using the disparity distribution histogram may include the following steps.

First, the ranges in the statistics of the disparity distribution histogram are set as the initially divided disparity ranges.

And then, distances between the representative disparity values of two adjacent disparity ranges are calculated, respectively. In an example, disparity values which the most pixels in each of the two adjacent disparity ranges have, may be extracted as the representative disparity values of the two adjacent disparity ranges, respectively. Alternatively, as described above, an average value of the disparity values of all pixels whose the disparity values are within the disparity range may be set as the representative disparity value of the disparity range. In an example, after the representative disparity value of the disparity range is determined, the absolute value of the difference between representative disparity values may be calculated as the distance between the representative disparity values. Alternatively, the square of the difference between the representative disparity values may also be set as the distance between the representative disparity values.

Next, it is determined whether the distance between the representative disparity values of the adjacent disparity ranges is less than a predetermined threshold. The two adjacent disparity ranges are merged, if the distance between the representative disparity values of the two adjacent disparity ranges is less than the predetermined threshold. In an example, for example, the predetermined threshold may be 3, when the interval of the initial disparity ranges is 5. In another example, the threshold may dynamically change, and for example, the threshold may be adaptively adjusted based on the size of the disparity ranges.

The calculation of the distance and the merging of the disparity ranges are repeated, until no merging can be performed.

In other words, the above calculation of the distance between the representative disparity values and the merging of the disparity ranges is an iterative process. Each of the iterations is performed for the current disparity ranges. For example, assuming there are k disparity ranges 1, 2, ..., k, the distance between disparity ranges 1 and 2 is calculated and it is determined whether a merging is performed and so on. Assuming that j disparity ranges are newly obtained by performing the process of the k-th disparity range, the process proceeds to the next iteration and a similar process of the j disparity ranges is performed. Such iterations are repeated, until no merging can be performed in iteration.

In step S232, after the disparity value range in the disparity distribution histogram is divided into a plurality of ranges, the process proceeds to step S233.

In step S233, one or more disparity ranges with a highest reliability or one or more disparity ranges whose reliability is greater than a predetermined threshold are extracted from the disparity ranges.

The reliability of the range may be calculated based on the number of pixels in the range and the range itself. In general, the larger the number of the pixels are, the higher the reliability of the range is; and the smaller the disparity value such as the representative disparity value of the range itself is, the higher the reliability of the range is. In an example, a table of the threshold of the reliability may be prepared in advance. As an example, the threshold is represented by the number of threshold pixels, the number of the threshold pixels is stored in association with the disparity value, and for example, a specific disparity value has a corresponding number of the threshold pixels. Thus, for a range, the representative disparity value of the range and the corresponding number of the pixels are calculated, the corresponding number of the threshold pixels is extracted from the reliability threshold table based on the calculated representative disparity value, and it is determined that the range is the reliable disparity value range if the number of pixels corresponding to the representative disparity value is greater than the extracted number of the threshold pixels.

In this way, one or more reliable disparity value ranges can be obtained.

The method for determining the reliable disparity value range from the disparity value range of the image block according to the embodiment of the present invention is described with reference to FIG. 5. However, the reliable disparity value range of the image block may also be determined by other methods. For example, for the disparity values of the pixels in the image block, a clustering result is obtained by a clustering algorithm such as K-Means, K-Medoids, GMM, FCM or the like; one or more clusters with a higher reliability are determined based on the density of the clustering (the number of sample points in classification with respect to a spatial range of the classification) and the size of the range; and the disparity value ranges of the one or more clusters are set as reliable disparity value ranges.

Returning to FIG. 3, after the reliable disparity value ranges of the disparity value ranges in the image block are determined in step S230, the process proceeds to step S240.

In step S240, for each of the pixels in the image block, it is determined whether the disparity value of the pixel is within the reliable disparity value range of the image block, and it is determined that the disparity value of the pixel is noise if the disparity value of the pixel is not within the reliable disparity value range.

After the process of step S240 is completed, the process proceeds to step S250.

In step S250, it is determined whether the current image block is the last image block. The process is terminated if it is the last image block, otherwise the process proceeds to step S260.

In step S260, the next image block is obtained and the process proceeds to step S230 to continue determining the reliable disparity value range for the image block (step S230), identify noise based on whether the disparity value of the image block is within the reliable disparity value range (step S240), and determine whether it is the last image block (step S250). The process is repeated until the process of the last image block is completed.

According to the noise identification method of the embodiment of the present invention, size of the selected blocks can be increased; therefore, higher computation efficiency can be obtained, and subsequent noise removal processing can be performed for only the identified noise pixels without affecting non-noise pixels.

Any processes may be performed for the identified noise. In an example, the noise pixels may be set as invalid pixels and the disparity value thereof may be set as zero. In another example, a filling process of the disparity value may be performed on the noise pixels based on the disparity values of pixels surrounding the noise pixel.

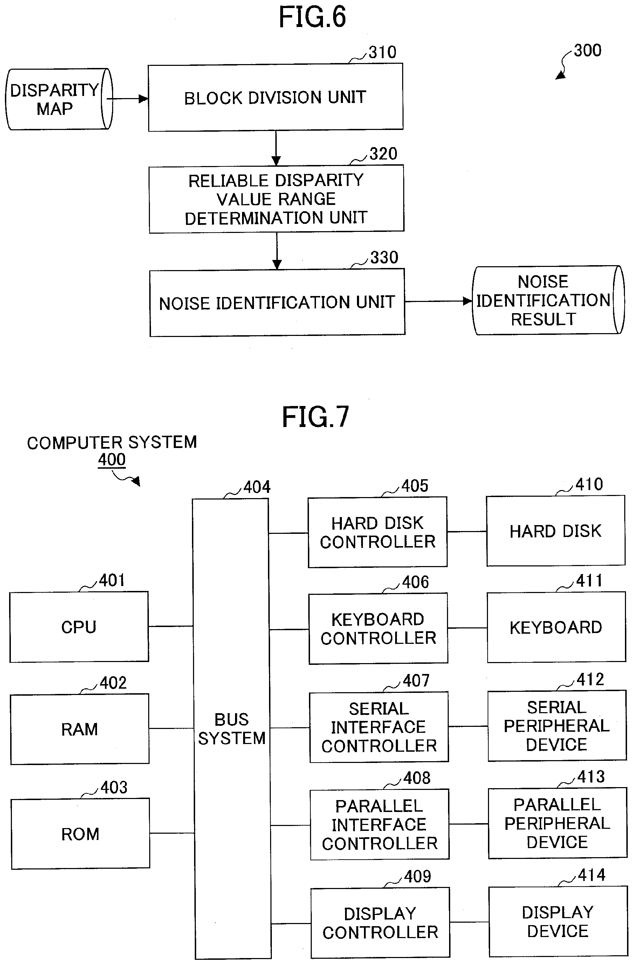

In the following, a noise identification apparatus 300 for identifying noise in a disparity depth image according to an embodiment of the present invention will be described with reference to FIG. 6.

FIG. 6 is a configuration block diagram illustrating a noise identification apparatus for identifying noise in a disparity depth image according to an embodiment of the present invention.

As illustrated in FIG. 6, noise identification apparatus 300 may include a block division unit 310 configured to divide the disparity depth image into a plurality of the image blocks; a reliable disparity value range determination unit 320 configured to determine, for each of image blocks, a reliable disparity value range in a disparity value range of the image block; and a noise identification unit 330 configured to determine, for each of the pixels in the image block, whether the disparity value of the pixel is within the reliable disparity value range of the image block, and determine that the disparity value of the pixel is noise if the disparity value of the pixel is not within the reliable disparity value range. The functions and operations of the block division unit 310, the reliable disparity value range determination unit 320 and the noise identification unit 330 may refer to the description of steps S210, S230 and S240 in FIG. 3.

It should be noted that, the noise identification apparatus 300 illustrated in FIG. 6 is just an example, other configurations may also be used as necessary, and for example, an additional noise pixel filling unit or the like may also be included.

The present invention may also be implemented as a computation system for identifying noise in a disparity depth image. FIG. 7 is a block diagram illustrating a computation system 400 for implementing the embodiment of the present invention. As illustrated in FIG. 7, the computation system (computer system) 400 may include a CPU 401, a RAM (Random Access Memory) 402, a ROM (Read-Only Memory) 403, a system bus (bus system) 404, a hard disk controller 405, a keyboard controller 406, a serial interface controller 407, a parallel interface controller 408, a display controller 409, a hard disk 410, a keyboard 411, a serial peripheral device 412, a parallel peripheral device 413 and a display device 414. In these devices, the system bus 404 is coupled to the CPU 401, the RAM 402, the ROM 403, the hard disk controller 405, the keyboard controller 406, the serial interface controller 407, the parallel interface controller 408 and the display controller 409. The hard disk 410 is coupled to the hard disk controller 405, the keyboard 411 is coupled to the keyboard controller 406, the serial peripheral device 412 is coupled to the serial interface controller 407, the parallel peripheral device 413 is coupled to the parallel interface controller 408, and the display device 414 is coupled to the display controller 409. It should be noted that, the configuration block diagram of FIG. 7 is only for the description, and the present invention is not limited to this diagram. In some cases, some devices may be added or removed as necessary.

The present invention may be implemented as a system, an apparatus, a method or a computer program product. Therefore, the present invention may be specifically implemented as hardware, software (including firmware, resident software, micro-code, etc.) a combination of hardware and software, which is referred to as "circuit", "module", "apparatus" or "system". Additionally, the present invention may also be implemented as a computer program product in one or more computer-readable media, and the computer-readable media include computer-readable computer codes.

Any combinations of one or more computer-readable media may be used. The computer-readable medium may be a computer-readable signal medium or a computer-readable storage medium. The computer-readable storage medium may be, for example, a system, apparatus or an electric, magnetic, optic, electromagnetic, infrared or semiconductor element, or a combination of any of the above, but is not limited to them. Specifically, the computer-readable storage medium may include a single electrical connection having a plurality of wires, a portable computer disk, a hard disk, a random access memory (RAM), a read-only memory, an erasable programmable read-only memory (an EPROM or a Flash memory), an optical fiber, a portable compact disc read-only memory (CD-ROM), an optical memory device, a magnetic storage device, or a suitable combination of any of the above. In the present specification, the computer-readable storage medium may include a tangible medium including or storing a program, and the program may be used by an instruction execution system, apparatus, device or a combination thereof.

The computer-readable signal medium may include data signals to be propagated as a part of a carrier wave, where computer-readable program codes are loaded. The propagated data signals may be electromagnetic signals, optical signals or a suitable combination thereof, but are not limited to these signals. The computer-readable medium may also be any computer-readable medium except the computer-readable storage medium, the computer-readable medium may send, propagate or transmit a program used by an instruction execution system, apparatus, device or a combination thereof.

The program codes included in the computer-readable medium may be transmitted by any transmission media, such as wireless, wire, optical cable, RF or any combinations thereof.

The computer program codes for executing the operation of the present invention may be written in one or more programming languages or a combination thereof. The programming languages include an object-oriented language such as JAVA, Smalltalk, C++, and a procedural programming language such as C or similar programming languages. The program codes may be executed on a user's computer completely or partly, be executed as an independent software package, be executed on a user's computer partly and a remote computer partly, or be executed on a remote computer or server completely. The remote computer may be connected to the user's computer via any network such as a local area network (LAN) or a wide area network (WAN), or may be connected to an external computer (for example by the Internet provided by an Internet service provider).

The present invention is described with reference to the flowcharts and/or block diagrams of the method, apparatus (system) and computer program products according to the embodiments of the present invention. It should be noted that, each block and a combination of the blocks in the flowcharts and/or the block diagrams may be implemented by computer program instructions. The computer program instructions may be provided to a processor of a general-purpose computer, a special-purpose computer or another programmable data processing apparatus, and the computer program instructions are executed by the computer or other programmable data processing apparatus to implement functions/operations in the flowcharts and/or the block diagrams.

The computer program instructions may also be stored in the computer-readable medium for making the computer or other programmable data processing apparatuses operate in a specific manner, and the instructions stored in the computer-readable medium may generate an instruction means for implementing the functions/operations in the flowcharts and/or the block diagrams.

The computer program codes may also be loaded on the computer, other programmable data processing apparatuses or other devices, so as to execute a series of operation steps in the computer, other programmable data processing apparatuses or other devices, so that the instructions executed in the computer or other programmable apparatuses can provide a process for implementing the functions/operations in the flowcharts and/or block diagrams.

The available system structure, functions and operations of the system, method and computer program product according to the present invention are illustrated by the flowcharts and block diagrams in the drawings. Each of the blocks in the flowcharts or block diagrams represent a module, program segment or a part of codes, and the module, program segment or the part of codes include one or more executable instructions for implementing logic functions. It should be noted that, in the apparatus or method of the present invention, units or steps may be divided and/or recombined. The division and/or recombination should be regarded as an equivalent embodiment of the present invention. Steps of the above method may be performed in time order, however the performed sequence is not limited to the time order. Any steps may be performed in parallel or independently.

The present invention is not limited to the specifically disclosed embodiments, and various modifications, combinations and replacements may be made without departing from the scope of the present invention as claimed.

## Claims

1. A method for identifying noise in a disparity depth image, the method comprising:
dividing the disparity depth image into a plurality of image blocks;
for each of image blocks, determining a reliable disparity value range in a disparity value range of the image block; and
for each of pixels in the image block, determining whether the disparity value of the pixel is within the reliable disparity value range of the image block, and determining that the disparity value of the pixel is noise if the disparity value of the pixel is not within the reliable disparity value range;
wherein
dividing the disparity depth image into the plurality of image blocks includes
dividing the whole disparity depth image into the plurality of image blocks that do not overlap each other; or
dividing the whole disparity depth image into the plurality of overlapping image blocks; and
wherein
the sizes of the image blocks vary according to representative disparity values of the image blocks, and
the larger the representative disparity value of the image block is, the larger the size of the image block is.

2. The method for identifying noise according to claim 1, wherein
determining the reliable disparity value range in the disparity value range of the image block includes
calculating a disparity distribution histogram of the image block;
dividing, by using the disparity distribution histogram, the disparity value range into a plurality of disparity ranges; and
extracting, from the plurality of disparity ranges, one or more disparity ranges with a highest reliability or one or more disparity ranges whose reliabilities are greater than a predetermined threshold as one or more reliable disparity value ranges.

3. The method for identifying noise according to claim 2, wherein
calculating the disparity distribution histogram includes
uniformly dividing the disparity value range of the image block or a disparity value range of the whole disparity depth image into m ranges [a0, a1), [a1, a2), ... , [a(m-1), am), where a0 and am are a minimum value and a maximum value of disparity values of the image block or the whole disparity depth image, respectively, and m is a positive integer greater than 2; and
scanning the disparity values of the pixels in the image block to take statistics of numbers of pixels within each of the ranges of the disparity values.

4. The method for identifying noise according to claim 2, wherein
dividing, by using the disparity distribution histogram, the disparity value range into the plurality of disparity ranges includes
setting the ranges in the statistics of the disparity distribution histogram as the initially divided disparity ranges;
calculating distance between the representative disparity values of two adjacent disparity ranges, respectively;
merging the two adjacent disparity ranges whose distance between the representative disparity values is less than a predetermined threshold; and
repeating the calculation of the distance and the merging of the disparity ranges, until no merging can be performed.

5. The method for identifying noise according to claim 4, wherein
calculating the distance between the representative disparity values of the two adjacent disparity ranges includes
extracting disparity values which the most pixels in each of the two adjacent disparity ranges have, as the representative disparity values of the two adjacent disparity ranges, respectively; and
calculating difference between representative disparity values of the two adjacent disparity ranges as the distance between the representative disparity values of the two adjacent disparity ranges.

6. An apparatus (300) for identifying noise in a disparity depth image, the apparatus comprising:
an image block division unit (310) configured to divide the disparity depth image into a plurality of image blocks;
a reliable disparity value range determination unit (320) configured to determine, for each of image blocks, a reliable disparity value range in a disparity value range of the image block; and
a noise identification unit (330) configured to determine, for each of pixels in the image block, whether the disparity value of the pixel is within the reliable disparity value range of the image block, and determine that the disparity value of the pixel is noise if the disparity value of the pixel is not within the reliable disparity value range;
wherein the image block division unit is configured either to divide the whole disparity depth image into the plurality of image blocks that do not overlap each other; or to divide the whole disparity depth image into the plurality of overlapping image blocks;
and wherein
the sizes of the image blocks vary according to representative disparity values of the image blocks, and
the larger the representative disparity value of the image block is, the larger the size of the image block is.

7. The apparatus for identifying noise according to claim 6, wherein
the reliable disparity value range determination unit (320) is configured to:
calculate a disparity distribution histogram of the image block;
divide, by using the disparity distribution histogram, the disparity value range into a plurality of disparity ranges; and
extract, from the plurality of disparity ranges, one or more disparity ranges with a highest reliability or one or more disparity ranges whose reliabilities are greater than a predetermined threshold as one or more reliable disparity value ranges.

8. The apparatus for identifying noise according to claim 7, wherein
when dividing, by using the disparity distribution histogram, the disparity value range into the plurality of disparity ranges, the reliable disparity value range determination unit (320) is configured to:
set the ranges in the statistics of the disparity distribution histogram as the initially divided disparity ranges;
calculate distance between the representative disparity values of two adjacent disparity ranges, respectively;
merge the two adjacent disparity ranges whose distance between the representative disparity values is less than a predetermined threshold; and
repeat the calculation of the distance and the merging of the disparity ranges, until no merging can be performed.

## Patentansprüche

1. Verfahren zum Identifizieren von Rauschen in Disparitätstiefenbildern, das Verfahren umfassend:
das Aufteilen des Disparitätstiefenbildes in eine Vielzahl von Bildblöcken;
für jeden der Bildblöcke Bestimmen eines verlässlichen Disparitätswertebereichs in einem Disparitätswertebereich des Bildblocks; und
für jedes Pixel in dem Bildblock Bestimmen, ob der Disparitätswert des Pixels innerhalb des verlässlichen Disparitätswertebereichs des Bildblocks liegt und Bestimmen, dass der Disparitätswert des Pixels Rauschen ist, wenn der Disparitätswert des Pixels nicht innerhalb des verlässlichen Disparitätswertebereichs liegt;
wobei
ein Aufteilen des Disparitätstiefenbildes in die Vielzahl von Bildblöcken Folgendes beinhaltet:
das Aufteilen des gesamten Disparitätstiefenbildes in die Vielzahl von Bildblöcken, die einander nicht überlappen; oder
das Aufteilen des gesamten Disparitätstiefenbildes in die Vielzahl überlappender Bildblöcke; und
wobei
sich die Größen der Bildblöcke entsprechend repräsentativer Disparitätswerte der Bildblöcke ändern, und
je größer der repräsentative Disparitätswert des Bildblocks ist, desto größer die Größe des Bildblocks ist.

2. Verfahren zum Identifizieren von Rauschen nach Anspruch 1, wobei
das Bestimmen des verlässlichen Disparitätswertebereichs in dem Disparitätswertebereich des Bildblocks Folgendes beinhaltet:
das Berechnen eines Disparitätsverteilungs-Histogramms des Bildblocks;
das Aufteilen, unter Verwendung des Disparitätsverteilungs-Histogramms, des Disparitätswertebereichs in eine Vielzahl von Disparitätsbereichen; und
das Extrahieren, aus der Vielzahl von Disparitätsbereichen, eines oder mehrerer Disparitätsbereiche mit einer höchsten Verlässlichkeit oder eines oder mehrerer Disparitätsbereiche, dessen Verlässlichkeiten höher sind als ein vorbestimmter Schwellenwert, als ein oder mehrere verlässliche Disparitätswertebereiche.

3. Verfahren zum Identifizieren von Rauschen nach Anspruch 2, wobei
das Berechnen des Disparitätsverteilungs-Histogramms Folgendes beinhaltet:
das einheitliche Aufteilen des Disparitätswertebereichs des Bildblocks oder eines Disparitätswertebereichs des gesamten Disparitätstiefenbildes in m Bereiche [a0, a1), [a1, a2), ..., [a(m-1), am), wobei a0 und am ein Minimalwert bzw. ein Maximalwert der Disparitätswerte des Bildblocks oder des gesamten Disparitätstiefenbildes sind und m eine positive ganze Zahl größer 2 ist; und
das Scannen der Disparitätswerte der Pixel in dem Bildblock, um Statistiken von Anzahlen an Pixeln innerhalb jeden dieser Bereiche der Disparitätswerte aufzustellen.

4. Verfahren zum Identifizieren von Rauschen nach Anspruch 2, wobei
das Aufteilen, unter Verwendung des Disparitätsverteilungs-Histogramms, des Disparitätswertebereichs in eine Vielzahl von Disparitätsbereichen Folgendes beinhaltet:
das Festlegen der Bereiche in den Statistiken des Disparitätsverteilungs-Histogramms als die ursprünglich aufgeteilten Disparitätsbereiche;
das Berechnen der Distanz zwischen den jeweiligen repräsentativen Disparitätswerten zweier benachbarten Disparitätsbereiche;
das Zusammenlegen der zwei benachbarten Disparitätsbereiche, deren Distanz zwischen den repräsentativen Disparitätswerten geringer ist als ein vorbestimmter Schwellenwert; und
das Wiederholen der Berechnung der Distanz und des Zusammenlegens der Disparitätsbereiche, bis kein Zusammenlegen durchgeführt werden kann.

5. Verfahren zum Identifizieren von Rauschen nach Anspruch 4, wobei
das Berechnen der Distanz zwischen den repräsentativen Disparitätswerten der zwei benachbarten Disparitätsbereiche Folgendes beinhaltet:
das Extrahieren von Disparitätswerten, die die meisten Pixel in jedem der zwei benachbarten Disparitätsbereichen haben, als die jeweiligen repräsentativen Disparitätswerte der zwei benachbarten Disparitätsbereiche; und
das Berechnen der Differenz zwischen repräsentativen Disparitätswerten der zwei benachbarten Disparitätsbereiche als den Abstand zwischen den repräsentativen Disparitätswerten der zwei benachbarten Disparitätsbereiche.

6. Vorrichtung (300) zum Identifizieren von Rauschen in Disparitätstiefenbildern, die Vorrichtung umfassend:
eine Bildblock-Divisionseinheit (310), die konfiguriert ist, um das Disparitätstiefenbild in eine Vielzahl von Bildblöcken aufzuteilen;
eine verlässliche Disparitätswertebereichs-Ermittlungseinheit (320), die konfiguriert ist, um für jeden Bildblock einen verlässlichen Disparitätswertebereich in dem Disparitätswertebereich des Bildblocks zu bestimmen; und
eine Rauschen-Identifizierungseinheit (330), die konfiguriert ist, um für jedes Pixel in dem Bildblock zu bestimmen, ob der Disparitätswert des Pixels innerhalb des verlässlichen Disparitätswertebereichs des Bildblocks liegt, und um zu bestimmen, dass der Disparitätswert des Pixels Rauschen ist, wenn der Disparitätswert des Pixels nicht innerhalb des verlässlichen Disparitätswertebereichs liegt;
wobei die Bildblock-Divisionseinheit konfiguriert ist, um entweder das gesamte Disparitätstiefenbild in die Vielzahl von Bildblöcken aufzuteilen, die einander nicht überlappen; oder um das gesamte Disparitätstiefenbild in die Vielzahl überlappender Bildblöcke aufzuteilen;
und wobei
sich die Größen der Bildblöcke entsprechend repräsentativer Disparitätswerte der Bildblöcke ändern, und
je größer der repräsentative Disparitätswert des Bildblocks ist, desto größer die Größe des Bildblocks ist.

7. Vorrichtung zum Identifizieren von Rauschen nach Anspruch 6, wobei
die verlässliche Disparitätswertebereichs-Ermittlungseinheit (320) zu folgendem konfiguriert ist:
Berechnen eines Disparitätsverteilungs-Histogramms des Bildblocks;
Aufteilen, unter Verwendung des Disparitätsverteilungs-Histogramms, des Disparitätswertebereichs in eine Vielzahl von Disparitätsbereichen; und
Extrahieren, aus der Vielzahl von Disparitätsbereichen, eines oder mehrerer Disparitätsbereiche mit einer höchsten Verlässlichkeit oder eines oder mehrerer Disparitätsbereiche, dessen Verlässlichkeiten höher sind als ein vorbestimmter Schwellenwert, als ein oder mehrere verlässliche Disparitätswertebereiche.

8. Vorrichtung zum Identifizieren von Rauschen nach Anspruch 7, wobei
bei dem Aufteilen, durch die Verwendung des Disparitätsverteilungs-Histogramms, des Disparitätswertebereichs in die Vielzahl von Disparitätsbereichen die verlässliche Disparitätswertebereichs-Ermittlungseinheit (320) zu folgendem konfiguriert ist:
Festlegen der Bereiche in den Statistiken des Disparitätsverteilungs-Histogramms als die ursprünglich aufgeteilten Disparitätsbereiche;
Berechnen der Distanz zwischen den jeweiligen repräsentativen Disparitätswerten zweier benachbarten Disparitätsbereiche;
Zusammenlegen der zwei benachbarten Disparitätsbereiche, deren Distanz zwischen den repräsentativen Disparitätswerten geringer ist als ein vorbestimmter Schwellenwert; und
Wiederholen der Berechnung der Distanz und des Zusammenlegens der Disparitätsbereiche, bis kein Zusammenlegen durchgeführt werden kann.

## Revendications

1. Procédé pour identifier du bruit dans une image de profondeur de disparité, le procédé comprenant :
la division de l'image de profondeur de disparité en une pluralité de blocs d'image ;
pour chacun des blocs d'image, la détermination d'une plage de valeurs de disparité fiable dans une plage de valeurs de disparité du bloc d'image ; et
pour chacun des pixels dans le bloc d'image, la détermination si la valeur de disparité du pixel est dans la plage de valeurs de disparité fiable du bloc d'image, et la détermination que la valeur de disparité du pixel est du bruit si la valeur de disparité du pixel n'est pas dans la plage de valeurs de disparité fiable ;
dans lequel
la division de l'image de profondeur de disparité en la pluralité de blocs d'image comprend :
la division de l'image de profondeur de disparité entière en la pluralité de blocs d'image qui ne se superposent pas les uns aux autres ; ou
la division de l'image de profondeur de disparité entière en la pluralité de blocs d'image se superposant ; et
dans lequel
les tailles des blocs d'image varient conformément à des valeurs de disparité représentatives des blocs d'image, et
plus la valeur de disparité représentative du bloc d'image est grande, plus la taille du bloc d'image est grande.

2. Procédé pour identifier du bruit selon la revendication 1, dans lequel
la détermination de la plage de valeurs de disparité fiable dans la plage de valeurs de disparité du bloc d'image comprend :
le calcul d'un histogramme de distribution de disparité du bloc d'image ;
la division, en utilisant l'histogramme de distribution de disparité, de la plage de valeurs de disparité en une pluralité de plages de disparité ; et
l'extraction, de la pluralité de plages de disparité, d'une ou de plusieurs plages de disparité avec une fiabilité la plus élevée ou d'une ou de plusieurs plages de disparité dont les fiabilités sont supérieures à un seuil prédéterminé en tant qu'une ou plusieurs plages de valeurs de disparité fiable(s).

3. Procédé pour identifier du bruit selon la revendication 2, dans lequel
le calcul de l'histogramme de distribution de disparité comprend :
la division, de manière uniforme, de la plage de valeurs de disparité du bloc d'image ou d'une plage de valeurs de disparité de l'image de profondeur de disparité entière en m plages [a0, al], [a1, a2], ..., [a(m-1), am], où a0 et am sont respectivement une valeur minimum et une valeur maximum des valeurs de disparité du bloc d'image ou de l'image de profondeur de disparité entière, et m est un entier positif supérieur à 2 ; et
le balayage des valeurs de disparité des pixels dans le bloc d'image pour prendre des statistiques de nombres de pixels dans chacune des plages des valeurs de disparité.

4. Procédé pour identifier du bruit selon la revendication 2, dans lequel
la division, en utilisant l'histogramme de distribution de disparité, de la plage de valeurs de disparité en la pluralité de plages de disparité comprend :
l'établissement des plages dans les statistiques de l'histogramme de distribution de disparité en tant que plages de disparité initialement divisées ;
le calcul de la distance entre les valeurs de disparité représentatives de deux plages de disparité adjacentes, respectivement ;
la fusion des deux plages de disparité adjacentes dont la distance entre les valeurs de disparité représentatives est inférieure à un seuil prédéterminé ; et
la répétition du calcul de la distance et de la fusion des plages de disparité, jusqu'à ce qu'aucune fusion ne puisse être effectuée.

5. Procédé pour identifier du bruit selon la revendication 4, dans lequel
le calcul de la distance entre les valeurs de disparité représentatives des deux plages de disparité adjacentes comprend :
l'extraction des valeurs de disparité que la plupart des pixels dans chacune des deux plages de disparité adjacentes ont, en tant que valeurs de disparité représentatives des deux plages de disparité adjacentes, respectivement ; et
le calcul de la différence entre des valeurs de disparité représentatives des deux plages de disparité adjacentes en tant que distance entre les valeurs de disparité représentatives des deux plages de disparité adjacentes.

6. Appareil (300) pour identifier du bruit dans une image de profondeur de disparité, l'appareil comprenant :
une unité de division en blocs d'image (310) configurée pour diviser l'image de profondeur de disparité en une pluralité de blocs d'image ;
une unité de détermination de plage de valeurs de disparité fiable (320) configurée pour déterminer, pour chacun des blocs d'image, une plage de valeurs de disparité fiable dans une plage de valeurs de disparité du bloc d'image ; et
une unité d'identification de bruit (330) configurée pour déterminer, pour chacun des pixels dans le bloc d'image, si la valeur de disparité du pixel est dans la plage de valeurs de disparité fiable du bloc d'image, et déterminer que la valeur de disparité du pixel est du bruit si la valeur de disparité du pixel n'est pas dans la plage de valeurs de disparité fiable ;
dans lequel l'unité de division en blocs d'image est configurée soit pour diviser l'image de profondeur de disparité entière en la pluralité de blocs d'image qui ne se superposent pas les uns aux autres, soit pour diviser l'image de profondeur de disparité entière en la pluralité de blocs d'image se superposant ;
et dans lequel
les tailles des blocs d'image varient conformément à des valeurs de disparité représentatives des blocs d'image, et
plus la valeur de disparité représentative du bloc d'image est grande, plus la taille du bloc d'image est grande.

7. Appareil pour identifier du bruit selon la revendication 6, dans lequel
l'unité de détermination de plage de valeurs de disparité fiable (320) est configurée pour :
calculer un histogramme de distribution de disparité du bloc d'image ;
diviser, en utilisant l'histogramme de distribution de disparité, la plage de valeurs de disparité en une pluralité de plages de disparité ; et
extraire, de la pluralité de plages de disparité, une ou plusieurs plages de disparité avec une fiabilité la plus élevée ou une ou plusieurs plages de disparité dont les fiabilités sont supérieures à un seuil prédéterminé en tant qu'une ou plusieurs plages de valeurs de disparité fiable(s).

8. Appareil pour identifier du bruit selon la revendication 7, dans lequel
lors de la division, en utilisant l'histogramme de distribution de disparité, de la plage de valeurs de disparité en la pluralité de plages de disparité, l'unité de détermination de plage de valeurs de disparité fiable (320) est configurée pour :
établir les plages dans les statistiques de l'histogramme de distribution de disparité en tant que plages de disparité initialement divisées ;
calculer la distance entre les valeurs de disparité représentatives de deux plages de disparité adjacentes, respectivement ;
fusionner les deux plages de disparité adjacentes dont la distance entre les valeurs de disparité représentatives est inférieure à un seuil prédéterminé ; et
répéter le calcul de la distance et la fusion des plages de disparité, jusqu'à ce qu'aucune fusion ne puisse être effectuée.
